# EUROPEAN PATENT APPLICATION

(11) **EP 4 691 990 A1**
(43) Date of publication of application: **11.02.2026**
(21) Application number: 24193633.5
(22) Date of filing: 08.08.2024
(51) Int. Cl.: C01F 11/18

(54) **METHOD OF AND APPARATUS FOR PRODUCING PRECIPITATED CALCIUM CARBONATE**

(71) Applicant: Fortum Waste Solutions Oy, 11120 Riihimäki (FI)
(72) Inventor: Nieminen, Harri, 11120 Riihimäki (FI); Kaila, Minna, 11120 Riihimäki (FI)
(74) Representative: Kolster Oy Ab

(57) **Abstract**

A method of and apparatus for producing precipitated calcium carbonate, comprising steps of: forming a first mixture comprising carbonate anions by feeding sodium hydroxide containing solution and carbon dioxide containing gas into an absorption reactor to absorb carbon dioxide with the sodium hydroxide containing solution; obtaining a calcium carbonate containing suspension by feeding said first mixture comprising carbonate anions and a calcium containing salt solution into a precipitation reactor; maturing the calcium carbonate containing suspension by mixing for obtaining a matured product comprising precipitated calcium carbonate having a desired crystal structure and a supernatant; and separating said precipitated calcium carbonate having the desired crystal structure and the supernatant from the matured product.

## Description

### Field

The invention relates to a field of a method of producing precipitated calcium carbonate and apparatus for producing precipitated calcium carbonate.

### Background

The known precipitated calcium carbonate production processes utilize several process steps which can be energy intensive. In one of the known methods, limestone (calcium carbonate) is mined and then it is calcinated at high temperature (1000°C) in a lime kiln to form calcium oxide. The calcination also releases carbon dioxide (CO₂) containing gas which is known to be a greenhouse gas. Calcium oxide in water is slaked to form calcium hydroxide. Finally, calcium carbonate is precipitated by re-introducing at least part of CO₂ generated during calcination into calcium hydroxide. There are several industrial applications which utilize precipitated calcium carbonate.

Hence, there is a need for a more sophisticated solution to alleviate the issues of the known solution.

### Brief description

The present invention is defined by the subject matter of the independent claims.

Embodiments are defined in the dependent claims.

The embodiments and features, if any, described in this specification that do not fall under the scope of the independent claim are to be interpreted as examples useful for understanding various embodiments of the invention.

### List of drawings

Example embodiments of the present invention are described below, by way of example only, with reference to the accompanying drawings, in which
Figures 1 - 4 illustrate a method of producing precipitated calcium carbonate and apparatus of producing precipitated calcium carbonate according to embodiments of the invention;
Figure 5 illustrates a flow chart of the method of producing precipitated calcium carbonate; and
Figure 6 illustrates a molar distribution of the carbon containing compounds in aqueous solutions according to an embodiment of the invention.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All combinations of the embodiments are considered possible if their combination does not lead to structural or logical contradiction.

The articles "a" and "an" give a general sense of entities, structures, components, compositions, operations, functions, connections or the like in this document. Note also that singular terms may include pluralities.

Calcium carbonate is commonly used as filler and pigment in paper, plastics, paints, and coatings. However, producing calcium carbonate may be energy intensive requiring high temperatures and resulting in generation of carbon dioxide containing gases. The aim of the invention is to provide a sustainable method of and apparatus for producing precipitated calcium carbonate and utilize carbon dioxide from flue gases and/or utilize waste streams of waste-to-energy plant.

The invention is set out in the appended set of claims.

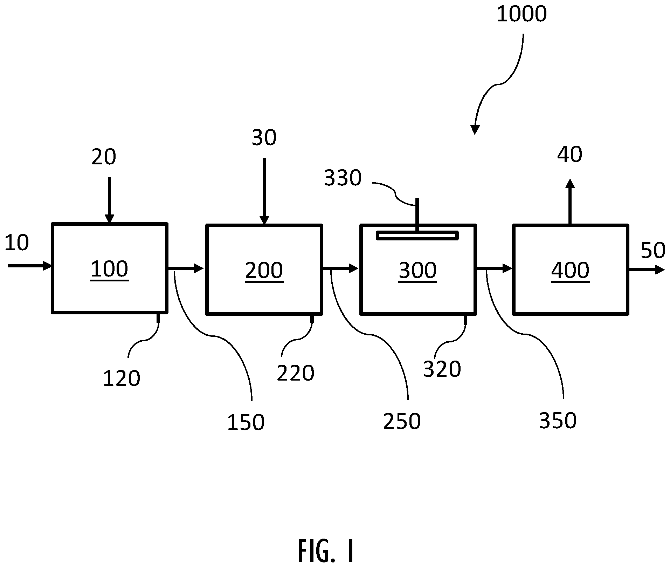

According to an embodiment of the invention, illustrated in Figure 1, there is provided a method of producing precipitated calcium carbonate 50, comprising steps of: forming a first mixture comprising carbonate anions by feeding sodium hydroxide containing solution 20 and carbon dioxide containing gas 10 into an absorption reactor 100 to absorb carbon dioxide 10 with the sodium hydroxide containing solution 20; obtaining a calcium carbonate containing suspension by feeding said first mixture comprising carbonate anions and a calcium containing salt solution 30 into a precipitation reactor 200; maturing 300 the calcium carbonate containing suspension by mixing for obtaining a matured product comprising precipitated calcium carbonate having a desired crystal structure and a supernatant; and separating 400 said precipitated calcium carbonate 50 having the desired crystal structure and the supernatant 40 from the matured product.

As illustrated in Fig. 1, the absorption reactor 100 is in flow connection with the precipitation reactor 200. There occur separate absorption and precipitation stages. The flow connection between the absorption reactor 100 and the precipitation reactor 200 is depicted with a flow connection line 150. The absorption reactor 100 may comprise at least one first feeding element 20 configured to feed sodium hydroxide containing solution therein and at least one second feeding element 10 configured to feed carbon dioxide containing gas therein. The precipitation reactor 200 comprises at least one feeder 30 configured to feed a calcium containing salt solution into the precipitation reactor 200. The precipitation reactor 200 is in flow connection with the maturation reactor 300. The flow connection between the precipitation reactor 200 and maturation reactor 300 is depicted with a flow connection line 250. The at least one feeder 30 configured to feed a calcium containing salt solution into the precipitation reactor 200 may be a tube or channel and may comprise one or more feeding nozzles.

According to an embodiment, a maturation reactor 300 is a separate reactor than the precipitation reactor 200. Thus, the method may comprise the step of maturing 300 the calcium carbonate containing suspension in the maturation reactor 300 by mixing for obtaining a matured product comprising precipitated calcium carbonate having a desired crystal structure and a supernatant. The maturation reactor 300 is in flow connection with the separator 400. The flow connection between the maturation reactor 300 and the separator 400 is depicted with a flow connection line 350. The separator is separate from the precipitation reactor 200 and the maturation reactor 300. The separator 400 comprises at least a first outlet for precipitated calcium carbonate 50 and at least a second outlet for the supernatant 40. In other words, the separator may be configured to separating 400 said precipitated calcium carbonate 50 having the desired crystal structure and the supernatant 40 from the matured product.

According to an embodiment, the separator 400 is a pressure filter. The pressure filter may be a filter press, tower press, rotary filter or Nutsche filter.

According to an embodiment, the separator 400 is a vacuum filter. The vacuum filter may be a rotary filter.

According to an embodiment, the maturation reactor 300 is the same as the precipitation reactor 200. In other words, the maturation reactor may be integrated with the precipitation reactor.

According to an embodiment, the absorption reactor 100, precipitation reactor 200 and maturation reactor 300 are individual reactors. In other words, the absorption reactor 100, precipitation reactor 200 and maturation reactor 300 are separate reactors. The absorption reactor 100, precipitation reactor 200 and maturation reactor 300 may be arranged sequential, in other words, one after the other.

When the sodium hydroxide (NaOH) containing solution and carbon dioxide (CO2) react in the absorption reaction to form the mixture comprising carbonate anions, at least the following chemical reaction may take place:

2NaOH(aq) + CO₂(g) → Na₂CO₃(aq) + H₂O(l).

The abbreviation "aq" refers to aqueous solution, "g" to gas and "l" to liquid. In other words, sodium hydroxide is an aqueous solution and carbon dioxide is introduced into the absorption reactor as gas. The reaction forms sodium carbonate (Na₂CO₃) and water (H₂O). In addition to above chemical reaction, the following chemical reaction may take place:

Na₂CO₃(aq) + CO₂(g) → NaHCO₃(aq) + H₂O(l).

In other words, sodium bicarbonate (NaHCO₃) may be formed when carbon dioxide (CO₂) reacts with sodium carbonate (Na₂CO₃).

According to an embodiment, a concentration of the sodium hydroxide containing solution is within a range of about 3M - about 5M. The abbreviation "M" depicts molar concentration, and its unit is mol/l.

According to an embodiment, the first mixture comprises sodium carbonate (Na₂CO₃) and water (H₂O).

According to an embodiment, the first mixture comprising sodium carbonate (Na₂CO₃) and water (H₂O) is fed into the precipitation reactor 200. In addition, the calcium containing salt solution 30 is fed into the precipitation reactor 200. Conditions controlled at the precipitation reactor may affect the morphology of calcium carbonate. The conditions controlled at the precipitation reactor may comprise at least one of: concentrations, pH, temperature, mixing speed, residence time and/or ionic strength. The residence time refers to a time how long time the solution is in the precipitation reactor. Ionic strength refers to a measure of total concentration of ions (or ionic components, such as salts) in the solution.

According to an embodiment, the calcium containing salt solution comprises calcium chloride (CaClz). Then, at least the following chemical reaction may take place:

Na₂CO₃(aq) + CaCl₂(aq) → CaCO₃(s) + 2NaCl(aq)

and calcium carbonate CaCO₃ is formed in solid form and sodium chloride NaCl in aqueous form. In other words, the calcium chloride (CaClz) is in aqueous solution that reacts with sodium carbonate.

According to an embodiment, at first the first mixture comprising sodium carbonate (Na₂CO₃) is fed into the precipitation reactor, and second the calcium containing salt solution comprising calcium chloride (CaClz) is fed into the precipitation reactor. So, at first may be introduced a solution that has high concentration and then a solution that has lower concentration is fed into the precipitation reactor. In other words, first sodium carbonate (Na₂CO₃) may be fed into the precipitation reactor, and second the calcium chloride (CaClz) may be fed into the precipitation reactor to be mixed with the sodium carbonate (Na₂CO₃) therein. In other words, the method may comprise a step of obtaining a calcium carbonate containing suspension by feeding at first the first mixture comprising carbonate anions into the precipitation reactor 200 and at second the calcium containing salt solution into the precipitation reactor 200. The first mixture comprising carbonate anions may comprise sodium carbonate (Na₂CO₃).

According to an embodiment, the method comprises the step of obtaining a calcium carbonate containing suspension by feeding said first mixture comprising carbonate anions and a calcium containing salt solution into a precipitation reactor 200 and controlling pH in the precipitation reactor. Controlling pH in the precipitation reactor may be performed by introduction of sodium hydroxide containing solution into the precipitation reactor 200. The sodium hydroxide (NaOH) containing solution may be aqueous sodium hydroxide (NaOH(aq)).

According to an embodiment, sodium hydroxide (NaOH) containing solution is aqueous sodium hydroxide (NaOH(aq)).

According to an embodiment, the precipitation reactor 200 comprises means to feed sodium hydroxide containing solution into the precipitation reactor 200. In other words, there may be a channel or tube arranged in flow connection with the precipitation reactor 200 to introduce sodium hydroxide containing solution into the precipitation reactor 200.

According to an embodiment, pH in the precipitation reactor is controlled by introduction of sodium hydroxide containing solution into the precipitation reactor 200. Advantageously, pH may be controlled during the process by adding sodium hydroxide into the precipitation reactor.

According to an embodiment, at first the calcium containing salt solution comprising calcium chloride (CaClz) is fed into the precipitation reactor and second the first mixture comprising sodium carbonate (Na₂CO₃) is fed into the precipitation reactor. So, at first may be introduced a solution that has low concentration and then a solution that has higher concentration is fed into the precipitation reactor. In other words, first the calcium chloride (CaClz) may be fed into the precipitation reactor, and second sodium carbonate (Na₂CO₃) may be fed into the precipitation reactor to be mixed with the calcium chloride (CaClz). In other words, the method may comprise a step of obtaining a calcium carbonate containing suspension by feeding at first the calcium containing salt solution into the precipitation reactor 200 and at second the first mixture comprising carbonate anions into the precipitation reactor 200 and at second. The first mixture comprising carbonate anions may comprise sodium carbonate (Na₂CO₃).

According to an embodiment, the first mixture comprising sodium carbonate (Na₂CO₃) and the calcium chloride (CaClz) are fed into the precipitation reactor substantially simultaneously.

According to an embodiment, concentration of calcium containing salt comprising calcium chloride is over 1M, preferably ≥5M (greater or equal to 5M). This may be the case if commercial calcium chloride is utilized.

According to an embodiment, concentration of calcium containing salt comprising calcium chloride is within a range of from about 1M to about 5M.

According to an embodiment, concentration of calcium containing salt comprising calcium chloride is within a range of from about 0.5M to about 5M.

According to an embodiment, concentration of calcium containing salt comprising calcium chloride is above 0.5M.

According to an embodiment, the calcium containing salt solution comprises sodium chloride (NaCl). Utilizing sodium chloride (NaCl) during precipitation in the precipitation reactor 200 may affect on particle sizes and/or particle size distribution. Increase of sodium chloride (NaCl) concentration, may decrease particle size of precipitated calcium carbonate.

According to an embodiment, when carbon dioxide (CO₂) and sodium hydroxide (NaOH) is fed into the absorption reactor 100 wherein the first mixture comprising at least sodium carbonate (Na₂CO₃(aq)) is formed. From the absorption reactor 100, the first mixture comprising sodium carbonate (Na₂CO₃(aq)) is fed via the flow connection line 150 into the precipitation reactor 200 into which also calcium chloride (CaClz) is fed from a separate feeding point. In the precipitation reactor 200 sodium carbonate (Na₂CO₃(aq)) and calcium chloride (CaClz) reacts and forms the calcium carbonate containing suspension. In the precipitation reactor 200 sodium carbonate (Na₂CO₃(aq)) and calcium chloride (CaClz) may be mixed so as to improve reactions and formation of the calcium carbonate containing suspension. The calcium carbonate containing suspension is fed from the precipitation reactor 200 via the flow connection line 250 into the maturation reactor 300. In the maturation reactor 300 the calcium carbonate containing suspension is mixed such that a matured product comprising precipitated calcium carbonate having a desired crystal structure and a supernatant is obtained. Advantageously, no additives and/or additional reactants are introduced into the maturation reactor 300. Preferably, the matured product comprises calcite as the desired crystal structure of the precipitated calcium carbonate. From the maturation reactor 300, precipitated calcium carbonate having the desired crystal structure and the supernatant is introduced into the separator 400 via the flow connection line 350. In the separator, precipitated calcium carbonate 50 having the desired crystal structure and the supernatant 40 are separated. The separator 400 may comprise a filter so that the matured product will be filtered such that calcium carbonate 50 having the desired crystal structure and the supernatant 40 are separated.

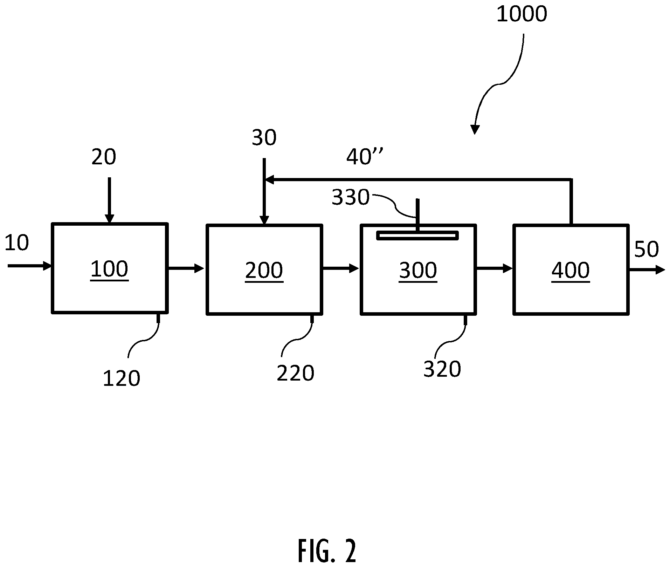

According to an embodiment, the supernatant may be mixed with the calcium containing salt solution so as to form calcium containing salt solution that comprises also supernatant. The supernatant may comprise sodium chloride as the major component. In other words, the supernatant may be sodium chloride rich. Referring now to Fig. 2, sodium chloride introduced together with calcium containing salt into the precipitation reactor 200 may be originating from the supernatant after the separator 400. In other words, the supernatant comprising sodium chloride as the major component may be recycled back to the precipitation step.

According to an embodiment, the maturation reactor 300 is in flow connection with the at least one feeder 30 to feed a calcium containing salt solution into the precipitation reactor 200. The flow connection from the maturation reactor 300 with the at least one feeder 30 to feed calcium containing salt solution into the precipitation reactor 200 is depicted with a flow connection line 40". In other terms, the sodium chloride and calcium chloride may be mixed with each other prior feeding the calcium containing salt solution into the precipitation reactor 200. Then at least the following chemical reaction may take place:

Na₂CO₃(aq) + CaCl₂(aq) + NaCl(aq) → CaCO₃(s) + 2NaCl(aq).

According to an embodiment, pH of the sodium carbonate Na₂CO₃ is about 12, preferably above 12.

According to an embodiment, the supernatant comprises sodium chloride (NaCl) that is mixed with the calcium containing salt solution prior feeding to the precipitation reactor 200. In other words, sodium chloride (NaCl) and calcium containing salt solution may be first mixed and then mixture of sodium chloride (NaCl) and calcium containing salt solution may be introduced into the precipitation reactor 200.

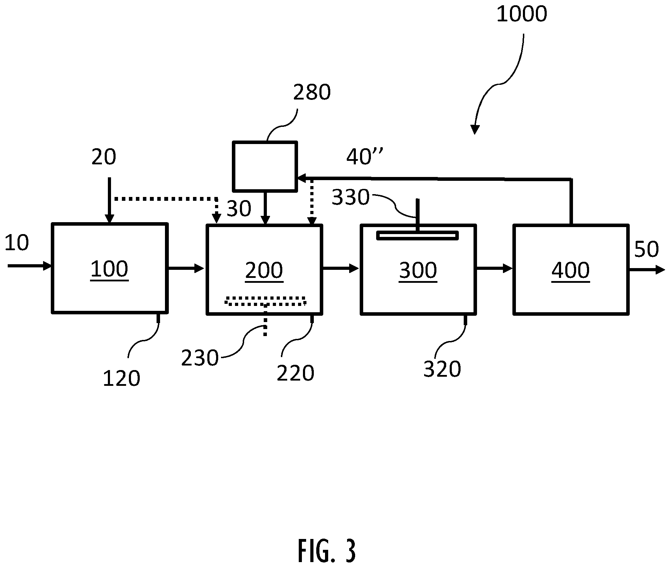

Referring to Fig. 3, according to an embodiment, the supernatant comprises sodium chloride (NaCl) that is mixed with the calcium containing salt solution in a tank 280 prior feeding to the precipitation reactor 200. The tank 280 may contain calcium containing salt, for example, calcium chloride (CaClz) into which the supernatant comprising sodium chloride (NaCl) that is mixed. The tank 280 may also be provided with a mixing means such as an agitator (not shown in figure). Furthermore, the tank 280 comprises at least one inlet for receiving calcium containing salt and at least one inlet for receiving supernatant. The tank 280 may further be provided with at least one outlet for feeding mixture of calcium containing salt and supernatant into the precipitation reactor 200. Alternatively, or in addition, the supernatant comprising sodium chloride (NaCl) may be fed directly into the precipitation reactor 200 as illustrated in Fig. 3 with dashed arrow. In other words, the supernatant and calcium containing salt solution is fed into the precipitation reactor 200 separately without mixing them prior feeding into the precipitation reactor 200.

According to an embodiment, successive circulations of supernatant result in increasing sodium chloride (NaCl) concentration. In case of the supernatant comprises unreacted sodium hydroxide (NaOH), it may increase pH of the supernatant in successive circulations so that pH of the supernatant is, for example, within a range of about 7 - about 12, or preferably about 8 - about 12 or most preferably about 8 - about 10.

According to an embodiment, concentration of sodium chloride (NaCl) in the supernatant is within a range of from about 1M to about 4M. Concentration of sodium chloride (NaCl) may be within a range of from about 2M to about 3.5M. The higher the concentration of sodium chloride, the smaller may be the particle size. Furthermore, the particle size distribution may be narrower.

According to an embodiment, concentration of sodium carbonate (Na₂CO₃) is from about 1M to about 4M.

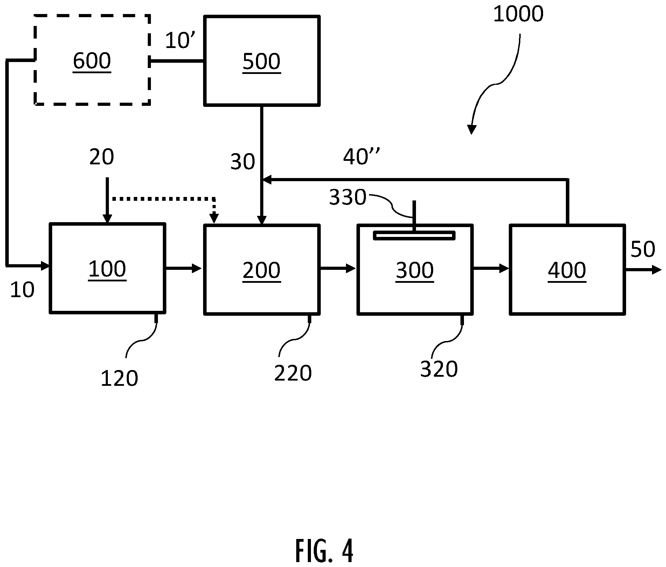

Referring now to Fig. 4. According to an embodiment, the calcium chloride (CaCl₂) is calcium chloride-rich water obtained from an industrial residue stream such as bottom and/or fly ash streams of a waste-to-energy plant 500. In other words, the waste-to-energy plant 500 is arranged in flow connection with the precipitation reactor 200. In Fig. 4, the flow connection between the waste-to-energy plant 500 and the precipitation reactor 200 is depicted with the flow connection line 30. It should be noted, however, that there may be one or more ash treatment section between the waste-to-energy plant 500 and the precipitation reactor 200. So, in other words, the flow connection line 30 may comprises at least one ash treatment section to provide calcium chloride-rich water into the precipitation reactor 200. This means that the ash may be treated such that desired salt content in the solution, preferably calcium chloride-rich solution, is obtained before its introduction into the precipitation reactor 200.

In this description, industrial residue streams may also be called as waste streams. Such waste streams could include flue gas salts recovered from ash and slag, and waste water.

According to an embodiment, the method of producing precipitated calcium carbonate comprises steps of: incinerating waste to produce carbon dioxide containing gas and forming ash; treating said formed ash to form a calcium containing salt solution. Preferably, the calcium containing salt comprises calcium chloride. So, this calcium chloride containing salt is used in the precipitation reactor. This reduces the waste material of the incineration plant.

According to an embodiment, when the calcium salt containing solution comprises calcium chloride from the waste streams of the waste-to-energy plant such as from fly ash and/or bottom ash, the concentration of the calcium salt containing solution is below 1M.

According to an embodiment, when the calcium salt containing solution comprises calcium chloride from treatment of fly ashes of the waste-to-energy plant, the concentration of the calcium salt containing solution is below 1M.

According to an embodiment, when the calcium salt containing solution comprises calcium chloride from the waste streams of the waste-to-energy plant such as from treatment of fly ash and/or bottom ash, the concentration of the calcium salt containing solution is over 0.5M.

Referring to Fig. 4, according to an embodiment, the flue gas 10' comprising CO₂ from the waste-to-energy plant 500 is fed into a gas treatment section 600 such as scrubber and/or cooler. In other words, the waste-to-energy plant 500 is in flow connection with the gas treatment section 600. The gas treatment section 600 may then feed CO₂-containing gas 10 into the absorption reactor 100 as illustrated in Fig. 3. In other words, the gas treatment section 600 is in flow connection with the absorption reactor 100. Alternatively, the flue gas comprising CO₂ may be fed directly from the waste-to-energy plant 500 into the absorption reactor. In this case, the waste-to-energy plant 500 is in direct flow connection with the absorption reactor 100. According to an embodiment, flue gas comprises 10% CO₂. A source of carbon dioxide may be an effluent and/or flue gas from a waste-to-energy plant, in other terms, a waste incineration plant.

Referring now to Figs. 1-4, according to an embodiment, the calcium carbonate containing suspension comprises vaterite and wherein during the maturing the calcium carbonate, vaterite is transitioned by dissolution and recrystallization to calcite that is the desired crystal structure. In other words, the calcium carbonate containing suspension comprises vaterite and wherein during the maturing the calcium carbonate, vaterite is transitioned by dissolution and recrystallization to calcite that is the desired crystal structure in the maturation reactor 300. During the precipitation, precipitated calcium carbonate is formed and the precipitated calcium carbonate may comprise at least one of vaterite and calcite. During maturation, vaterite is transitioned by dissolution and recrystallization to calcite that is the desired crystal structure in the maturation reactor 300. Advantageously, maturation will increase yield of calcite.

According to an embodiment, the maturation phase takes from about 15 minutes to about 5 hours. Control of maturation time may be used to obtain a desired particle size distribution. Longer maturation time may result in larger particle size but narrow particle size distribution. Furthermore, maturation may advantageously result in the desired crystal structure that is calcite. In other words, maturation step comprising maturing the calcium carbonate containing suspension by mixing for obtaining a matured product comprising precipitated calcium carbonate having a desired crystal structure and a supernatant aims to result in the desired crystal structure, advantageously calcite. Maturation takes place in the maturation reactor 300.

According to an embodiment, the maturation reactor is a batch reactor in which batches of calcium carbonate containing suspension is matured at a time.

According to an embodiment, the maturation reactor is a continuous reactor in which calcium carbonate containing suspension is matured continuously.

As illustrated embodiments of Figs. 1-4, advantageously, during maturing, no additives, water, and/or reactants will be introduced into the maturation reactor 300. In other words, maturing takes place during mixing in the maturation reactor 300 without introduction of additives, reactants and/or water therein. This also reduces the complexity of the method and apparatus. The inventors have found out that maturation of precipitated calcium carbonate solution, i.e. calcium carbonate containing suspension, results in the desired polymorph (i.e., crystal form) of the precipitated calcium carbonate. In other words, mixing of the calcium carbonate containing suspension without further additive and/or reactant addition results in the desired calcium carbonate crystal structure.

According to an embodiment, pH in the absorption reactor 100 is maintained above 9, preferably within a range 9.5-14, most preferably within a range 12-14. In other words, pH in the absorption reactor 100 is maintained above 9, preferably within a range about 9.5 - about 14, most preferably within a range about 12 - about 14. Controlling feed rate of sodium hydroxide (NaOH) containing solution into the absorption reactor 100 may be used to maintain and/or control the pH in the absorption reactor 100 at a preferred range. In other words, ratio of sodium hydroxide (NaOH) to carbon dioxide (CO2) in the absorption reactor affects pH.

According to an embodiment, initial pH in the precipitation reactor is about 12.3 and after the calcium containing salt solution comprising calcium chloride (CaClz)is introduced, pH is between about 7 - about 13, preferably about 7 - about 12.5. In this case, the first mixture comprising the sodium carbonate (Na₂CO₃(aq)) is introduced first into the precipitation reactor 200 that has the pH about 12.3. It may, however, be possible that pH may not be controlled during the process. Thus, the pH may start with a higher pH value and to be reduced during the process. In other words, if pH is not controlled in the precipitation reactor, in other terms during precipitation phase, pH value may decrease during the precipitation.

According to an embodiment, pH in the precipitation reactor is maintained above 9.

According to an embodiment, pH in the precipitation reactor is maintained above 9, preferably within a range 9.5-14, most preferably within a range 12-14.

According to an embodiment, pH in the precipitation reactor is maintained above 9, preferably within a range 9.5-12.5, most preferably within a range 10-12.5. In other words, pH in the precipitation reactor is maintained above 9, preferably within a range about 9.5 - about 12.5, most preferably within a range about 10 - about 12.5. Higher pH in the precipitation reactor and/or the maturation reactor increases a calcite yield, i.e. the desired crystal structure. Furthermore, by controlling the mixing speed during maturation may affect on calcite formation. Control of pH in the precipitation reactor 200 may be performed with the addition of sodium hydroxide (NaOH) into the precipitation reactor 200.

According to an embodiment, the absorption reactor 100 comprises a pH metering device 120. According to an embodiment, the precipitation reactor 200 comprises an agitator and pH metering device 220. By introduction of calcium containing salt solution, pH in the precipitation reactor 200 may be controlled. According to an embodiment, the maturation reactor 300 comprises an agitator and pH metering device 320.

According to an embodiment, reaction conditions in the absorption reactor 100, the precipitation reactor 200, the maturation reactor 300 and the separator 400 is configured such that pH in the reactors is within a range about 9 - about 14. This may be the case when pH during the process is controlled.

According to an embodiment, sodium hydroxide containing solution is introduced into the precipitation reactor 200. Introduction of sodium hydroxide containing solution into the precipitation reactor may control pH in the precipitation reactor. In other words, advantageously, pH may be controlled during the process by adding sodium hydroxide into the precipitation reactor 200. Figures 3 and 4 illustrate an embodiment, with dashed line in which sodium hydroxide containing solution 20 is introduced into the precipitation reactor 200. Dashed line depicts that introduction of sodium hydroxide containing solution into the precipitation reactor 200 may be optional and be used if pH may be controlled in the precipitation reactor 200. Introduction of sodium hydroxide into the precipitation reactor may be possible also in all of the embodiments described in this application. In other words, all embodiments may comprise introduction of sodium hydroxide containing solution 20 into the precipitation reactor 200 (so not only of the embodiments described in Figures 3 and 4). Nevertheless, this introduction of sodium hydroxide into the precipitation reactor is described in Figures 3 and 4, it may be possible in all of the embodiments of the application. Advantageously, sodium hydroxide containing solution is aqueous sodium hydroxide (NaOH (aq)).

According to an embodiment, sodium hydroxide containing solution that is fed into the precipitation reactor has the same concentration as the sodium hydroxide containing solution fed into the absorption reactor. In other words, the sodium hydroxide containing solution is the same that is utilized in the absorption reactor and in the precipitation reactor. The sodium hydroxide solutions may be stored in the same container or different containers. There may be a tube that transmits the sodium hydroxide containing solution and the tube may have two branches in which a first branch is in flow connection with the absorption reactor 100 and a second branch is in flow connection with the precipitation reactor 200. Figs. 3-4 illustrate an embodiment comprising two branches.

According to an embodiment, sodium hydroxide containing solution that is fed into the precipitation reactor has different concentration than the sodium hydroxide containing solution fed into the absorption reactor. In other words, sodium hydroxide solutions may be stored in different containers.

According to an embodiment, reaction conditions in the absorption reactor 100, the precipitation reactor 200 and the maturation reactor 300 is so that pH is within a range about 9.5 - about 12.5, preferably within a range of about 10 to about 12.3.

According to an embodiment, reaction conditions in the absorption reactor 100, the precipitation reactor 200, the maturation reactor 300 and the separator 400 is so that pH is within a range about 9.5 - about 12.5, preferably within a range of about 10 to about 12.3.

According to an embodiment, pH in the absorption reactor is within a range of about 9 to about 14.

According to an embodiment, pH in the precipitation reactor 200 and in the maturation reactor 300 is within a range of about 7 to about 14.

According to an embodiment, at least one of absorption reactor 100, precipitation reactor 200 and maturation reactor 300 comprises at least one pH metering device. The pH metering device may be called as pH measuring device. In other words, the pH metering device is configured to measure pH in the reactor. Utilizing the measured pH value, it may be possible to control pH in the reactor, for example, by controlling feed of aqueous solutions into the absorption and/or precipitation reactors.

According to an embodiment, the method comprises steps of feeding carbon dioxide containing gas at a temperature range of 30°C-50°C. In other words, temperature of the carbon dioxide containing gas is within the range of about 30°C to about 50 °C. Carbon dioxide containing gas is more easily dissolvable into the sodium hydroxide within this range rather than higher temperature. According to an embodiment, carbon containing gas may be cooled to be within the range of about 30°C to about 50 °C. Advantageously, there is no need to cool the carbon dioxide containing gas below 30°C which reduces energy requirements.

According to an embodiment, temperature in the absorption reactor is within a range of about 20 °C - about 80 °C. It may be possible that temperature during absorption rises when reactions take place.

According to an embodiment, temperature in the precipitation reactor 200 and/or maturation reactor is within a range of about 20 °C - about 80 °C.

According to an embodiment, the method comprises steps of maintaining temperature and/or pressure substantially constant during the method steps of precipitation and maturation.

According to an embodiment, the method comprises steps of maintaining temperature at ambient in the precipitation reactor and/or maturation reactor. This means that reactions will take place at ambient temperatures during precipitation and/or maturation.

According to an embodiment, the separation phase comprises a washing step for washing precipitated calcium carbonate. The washing step may comprise water that washes the precipitated calcium carbonate. Then salts and/or impurities such as sodium chloride (NaCl) may be dissolved in the water which may be used in the precipitation, i.e. in the precipitation reactor 200.

According to an embodiment, after separating the precipitated calcium carbonate and the supernatant from the matured product, the precipitated calcium carbonate may be dried.

According to an embodiment, after washing precipitated calcium carbonate, the precipitated calcium carbonate may be dried.

According to an embodiment, the method comprises separating by filtration the precipitated calcium carbonate and the supernatant from the matured product. The supernatant may be called as a filtrate.

According to an embodiment, the filtration comprises a washing step for washing precipitated calcium carbonate. The washing step may comprise water that washes the precipitated calcium carbonate. Then salts and/or impurities such as sodium chloride (NaCl) may be dissolved in the water which may be used in the precipitation, i.e. in the precipitation reactor 200.

According to an embodiment, after separating by filtration the precipitated calcium carbonate and the supernatant from the matured product, the precipitated calcium carbonate may be dried.

According to an embodiment, particle size d90 of the precipitated calcium carbonate is within a range of about 1 µm to about 17 µm, preferably about 1 µm to about 15 µm, most preferably about 1 µm to about 10 µm.

According to an embodiment, during maturation, a particle size and/or particle size distribution is analysed by sampling intermittently. In other words, the particle size and/or particle size distribution is analysed by taking samples from the maturation reactor.

According to an embodiment, a particle size and/or particle size distribution is analysed by sampling intermittently directly after precipitation, after maturation, and/or after filtration. In other words, after precipitation one or more of samples will be collected and analysed before the maturation and/or after the maturation samples will be collected and analysed before the separation.

According to an embodiment, a particle size and/or particle size distribution is analysed by sampling intermittently during precipitation and/or maturation.

According to an embodiment, a particle size and/or particle size distribution is analysed by sampling intermittently directly after precipitation, after maturation, after filtration, during precipitation and/or maturation.

Referring now to Figs. 1-4 disclosing embodiments of an apparatus for producing precipitated calcium carbonate. The apparatus is configured to perform the method of producing precipitated calcium carbonate. In other words, the apparatus configured to produce precipitated calcium carbonate.

According to an embodiment, the method comprises only one precipitation stage to form a calcium carbonate containing suspension. In other words, the method comprises only one precipitation stage obtaining a calcium carbonate containing suspension by feeding said first mixture comprising carbonate anions and a calcium containing salt solution into a precipitation reactor. The precipitation reactor may be configured to obtain during the precipitation phase a calcium carbonate containing suspension by feeding the first mixture comprising carbonate anions, and feeding a calcium containing salt solution into the precipitation reactor.

According to an embodiment, the apparatus 1000 for producing precipitated calcium carbonate 50, comprises: an absorption reactor 100 comprising at least one first feeding element 20 configured to feed sodium hydroxide containing solution therein and at least one second feeding element 10 configured to feed carbon dioxide containing gas therein and configured to form a first mixture comprising carbonate anions; a precipitation reactor 200 arranged in flow connection with the absorption reactor 100 configured to feed 150 the first mixture comprising carbonate anions and comprising at least one feeder 30 to feed a calcium containing salt solution so as to obtain a calcium carbonate containing suspension in the precipitation reactor; a mixing element 330 configured to mix the calcium carbonate containing suspension for obtaining a matured product comprising precipitated calcium carbonate having a desired crystal structure and a supernatant; and a separator 400 configured to separate said precipitated calcium carbonate 50 having the desired crystal structure and the supernatant 40, 40" from the matured product. In other words, the apparatus may be considered to be configured to perform the method of producing precipitated calcium carbonate. According to an embodiment, the absorption reactor 100 comprises multiple columns. The columns may be packed. In other words, packed columns may be filled with packing material for effective gas-liquid contact. Packing may be random comprising different shapes of material, e.g. balls, packed randomly in the column, or structured comprising a column filled with a regular structure made from steel or plastic.

According to an embodiment, the apparatus 1000 for producing precipitated calcium carbonate 50, comprises: an absorption reactor 100 comprising at least one first feeding element 20 configured to feed sodium hydroxide containing solution therein and at least one second feeding element 10 configured to feed carbon dioxide containing gas therein and configured to form a first mixture comprising carbonate anions; a precipitation reactor 200 arranged in flow connection with the absorption reactor 100 configured to feed 150 the first mixture comprising carbonate anions and comprising at least one feeder 30 to feed a calcium containing salt solution so as to obtain a calcium carbonate containing suspension in the precipitation reactor; a maturation reactor 300 comprising a mixing element 330 configured to mix the calcium carbonate containing suspension for obtaining a matured product comprising precipitated calcium carbonate having a desired crystal structure and a supernatant; and a separator 400 configured to separate said precipitated calcium carbonate 50 having the desired crystal structure and the supernatant 40, 40" from the matured product. In other words, the apparatus may be considered to be configured to perform the method of producing precipitated calcium carbonate.

According to an embodiment, the apparatus comprises a separate maturation reactor 300. In other words, the maturation reactor 300 is arranged in flow connection via the flow connection line 250 with the precipitation reactor 200. The flow connection line 250 is configured to feed the calcium carbonate containing suspension from the precipitation reactor 200 into the maturation reactor 300. The maturation reactor 300 comprises the mixing element configured to mix the calcium carbonate containing suspension for obtaining a matured product comprising precipitated calcium carbonate having a desired crystal structure and a supernatant.

According to an embodiment, the mixing element 330 is an agitator.

According to an embodiment, the precipitation reactor 200 comprises at least one mixing element. Figure 3 illustrates that precipitation reactor 200 may comprise at least one mixing element 230. Nevertheless the at least one mixing element is shown in Fig. 3, it may be possible in all of the embodiments of the application that the precipitation reactor comprises at least one mixing element. In other words, all embodiments may comprise the precipitation reactor 200 that comprises at least one mixing element 230 (so not only of the embodiment described in Figure 3). According to an embodiment, the precipitation reactor 200 is equipped with heating and/or cooling means for temperature control. In other words, the precipitation reactor 200 may comprise heating and/or cooling means.

According to an embodiment, the precipitation reactor 200 is a tank equipped with heating and/or cooling means for temperature control. The tank may be a mixing tank comprising mixing means. The heating/cooling means may be a jacket. In other words, the heating and/or cooling means may surround at least partially the precipitation reactor. Heat transfer fluid flows and/or circulates via the jacket so as to heat and/or cool the precipitation reactor. In other words, heat is exchanged between the heat transfer fluid and content of the precipitation reactor. The jacket comprises at least one inlet for the heat transfer fluid and at least one outlet for the fluid.

According to an embodiment, the maturation reactor 300 is equipped with heating and/or cooling means for temperature control. In other words, the maturation reactor 300 may comprise heating and/or cooling means.

According to an embodiment, the maturation reactor 300 is a tank equipped with heating and/or cooling means for temperature control. The tank may be a mixing tank comprising mixing means. The heating and/or cooling means may be a jacket. In other words, the heating and/or cooling means may surround at least partially the maturation reactor. Heat transfer fluid flows and/or circulates via the jacket so as to heat and/or cool the maturation reactor. In other words, heat is exchanged between the heat transfer fluid and content of the maturation reactor. The jacket comprises at least one inlet for the heat transfer fluid and at least one outlet for the fluid.

According to an embodiment, heat transfer fluid in the jacket is water. In other words, in case the precipitation and/or maturation reactor comprises heating and/or cooling means that may be a jacket, the heat transfer fluid utilized in the jacket is water.

According to an embodiment, the separator 400 comprises a recycling line 40" connected to the precipitation reactor 200 and configured to recycle supernatant comprising sodium chloride (NaCl) into the precipitation reactor 200. In other words, the separator 400 is arranged in flow connection with the precipitation reactor 200 via the recycling line 40". In the separator 400, the matured product may be filtered such that calcium carbonate 50 having the desired crystal structure and the supernatant 40 are separated from which the supernatant is fed into the recycling line 40" which is in flow connection with the precipitation reactor 200.

According to an embodiment, the at least one feeder 30 comprises an inlet end connected with the recycling line 40" for feeding supernatant therein. In other words, the supernatant is mixed with the calcium salt containing solution prior their introduction into the precipitation reactor 200.

According to an embodiment, referring to Fig. 4, carbon dioxide source is from a waste-to-energy (WtE) plant that is fed into the absorption reactor 100 for which also sodium hydroxide is fed. Carbon dioxide is dissolved into sodium hydroxide to form a first mixture. The first mixture is fed into the precipitation reactor 200 into which also calcium chloride-rich solution from an ash treatment of the waste-to-energy plant is fed to form a calcium carbonate containing suspension in the precipitation reactor. The term calcium chloride-rich solution may be interpreted as a solution that comprises calcium chloride as the main salt component. The calcium carbonate containing suspension is fed into the maturation reactor 400 in which the matured product comprising precipitated calcium carbonate having a desired crystal structure and a supernatant is formed. In other words, the maturation reactor 300 is arranged in flow connection with the separator 400 via the flow connection line 350. In other terms, the flow connection line 350 is configured to feed the matured product from the maturation reactor 300 into the separator 400. In the separator 400, precipitated calcium carbonate 50 having the desired crystal structure and the supernatant 40, 40" are separated from the matured product.

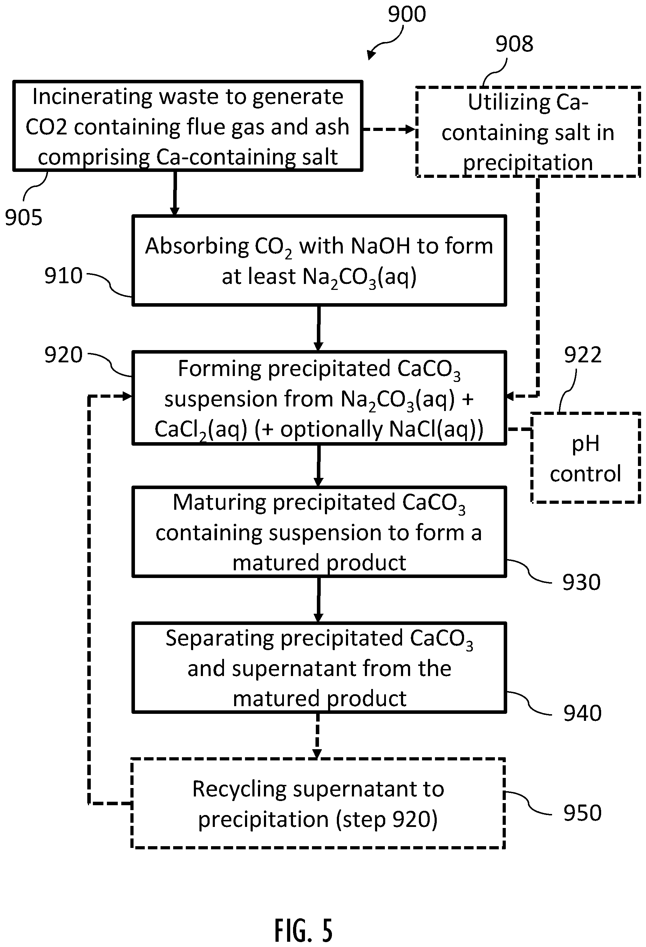

Referring to Fig. 5, disclosing a flow chart 900 of the method of precipitating calcium carbonate according to an embodiment comprising step of: incinerating waste 905 to generate carbon dioxide (CO₂) containing flue gas and ash comprising calcium containing salt. The ash may be fly ash and/or bottom ash. Absorbing 910 carbon dioxide (CO₂) of the flue gas with sodium hydroxide (NaOH) to form a first mixture having at least carbonate anions comprising sodium carbonate (Na₂CO₃). Forming 920 precipitated calcium carbonate suspension from sodium carbonate (Na₂CO₃(aq)) and calcium chloride (CaCl₂(aq)). Advantageously, the precipitated calcium carbonate suspension comprises calcium carbonate (CaCO₃(s)) and sodium chloride (2NaCl(aq)). Optionally utilizing calcium containing salt 908 from the incineration ash as CaCl₂(aq) in the step 920. In other words, in precipitation of calcium carbonate in step 920, sodium carbonate (Na₂CO₃(aq)) and calcium chloride (CaClz) form a solution that is a precipitated calcium carbonate containing suspension. Optionally, pH may be controlled in the precipitation reactor with the addition of sodium hydroxide (NaOH) and illustrated in Fig. 5, as "pH control" with reference 922. Maturing 930 precipitated calcium carbonate containing suspension in the maturation reactor to form a matured product. During maturation, the precipitated calcium carbonate suspension is mixed, for example, from about 15 minutes to about 5 hours. The matured product comprises precipitated calcium carbonate having a desired crystal structure and a supernatant. Preferably, the desired crystal structure is calcite. The supernatant comprises sodium chloride (NaCl). In the separation step 940, precipitated calcium carbonate comprising the desired crystal structure and supernatant is separated. The separation step may comprise washing of calcium carbonate. Optionally the supernatant comprising sodium chloride (NaCl) is recycled 950 to the precipitation phase. In other words, then in the step 920, forming 920 precipitated calcium carbonate suspension from sodium carbonate (Na₂CO₃(aq)), calcium chloride (CaCl₂(aq)) and sodium chloride (NaCl(aq)). In other words, in precipitation of calcium carbonate in step 920, sodium carbonate (Na₂CO₃(aq)), calcium chloride (CaClz) and sodium chloride (NaCl(aq)) form a solution that is a precipitated calcium carbonate containing suspension. Advantageously, this method of producing calcium carbonate will reduce carbon dioxide emissions of the incineration plant as well as reduce waste streams (such as ash streams) of the incineration plant. Furthermore, this renders possible for directly capturing carbon dioxide (CO₂) from flue gases and utilize it (carbon dioxide) in the method of and apparatus for producing precipitated calcium carbonate.

In Fig. 5, potentially optional steps have been depicted with dashed lines/boundaries, however, those (utilization of calcium containing salts from the waste incineration and recycling supernatant to precipitation) may improve the overall efficiency of the process and waste stream management. Furthermore, according to an embodiment, after separating precipitated calcium carbonate and supernatant from the matured product, the method comprises a step of washing and/or drying the precipitated calcium carbonate having the desired crystal structure.

Since the desired crystal structure of calcium carbonate is calcite according to an embodiment, the method of producing calcium carbonate may be called as the method of producing calcite. Similarly, the apparatus for producing calcite according to an embodiment.

According to a preferable embodiment, the method of producing precipitated calcium carbonate, comprises steps of: forming sodium carbonate (Na₂CO₃(aq)) by feeding sodium hydroxide (NaOH(aq)) and carbon dioxide (CO₂(g)) into the absorption reactor to absorb carbon dioxide with the sodium hydroxide; obtaining a calcium carbonate containing suspension by feeding said sodium carbonate (Na₂CO₃(aq)) and a calcium chloride containing (CaClz) solution into the precipitation reactor; maturing the calcium carbonate containing suspension by mixing for obtaining a matured product comprising calcite and a supernatant; and separating said calcite and the supernatant from the matured product.

According to an embodiment, since aqueous solutions such as sodium hydroxide (NaOH), sodium chloride (NaCl) and/or calcium chloride (CaClz) are utilized, the water therein may comprise calcium ions. Preferably hardly any magnesium ions are present in the aqueous solutions. Namely, it has been found out that presence of magnesium may prevent of retards transformation of amorphous calcium carbonate and transfer of crystal structure from vaterite to calcite. In other words, presence of magnesium may hamper calcite formation. Furthermore, presence of magnesium may also increase aragonite formation and may result in increased agglomeration.

According to an embodiment, the ratio of the calcium ions and magnesium ions in aqueous solutions the ratio is over 4000.

According to an embodiment the ratio of the calcium ions and magnesium ions in aqueous solutions is within the range of 1000:1 to 10000:1.

According to an embodiment, aqueous solution of sodium hydroxide (NaOH) has a ratio of the calcium ions and magnesium ions over 4000. Magnesium content may be on average from about 5 mg/l to about 10 mg/l.

According to an embodiment, magnesium content is on average less than 100 mg/l.

According to an embodiment the ratio of the calcium ions and magnesium ions in aqueous solutions is within the range of 200:1 to 25000:1.

According to an embodiment, magnesium content is on average within a range from about 1 mg/l to 100 mg/l.

According to an embodiment, aqueous solution of sodium hydroxide (NaOH) has a ratio of the calcium ions and magnesium ions within the range of 1000:1 to 10000:1.

According to an embodiment, aqueous solution of calcium chloride (CaClz) has a ratio of the calcium ions and magnesium ions over 4000. Magnesium content may be on average from about 5 mg/l to about 10 mg/l.

According to an embodiment, aqueous solution of calcium chloride (CaClz) has a ratio of the calcium ions and magnesium ions within the range of 1000:1 to 10000:1.

According to an embodiment, calcium containing salt solution has a ratio of the calcium ions and magnesium ions over 4000. Magnesium content may be on average from about 5 mg/l to about 10 mg/l.

According to an embodiment, calcium containing salt solution has a ratio of the calcium ions and magnesium ions within the range of 1000:1 to 10000:1.

According to an embodiment, aqueous solution of sodium chloride (NaCl) has a ratio of the calcium ions and magnesium ions over 4000. Magnesium content may be on average from about 5 mg/l to about 10 mg/l.

According to an embodiment, aqueous solution of sodium chloride (NaCl) has a ratio of the calcium ions and magnesium ions within the range of 1000:1 to 10000:1.

In the following table an example of conditions prevailing in the reactors is shown according to an embodiment.

| Reactor | Temperature range [°C] | pH range |
|---|---|---|
| Absorption reactor 100 | about 20- about 80 | about 9 - about 14 |
| Precipitation reactor 200 | about 20- about 80 | about 7 - about 14 |
| Maturation reactor 300 | about 20- about 80 | about 7 - about 14 |

In the following table an example of concentrations of compounds (sodium hydroxide (NaOH), calcium chloride (CaClz) from waste-to-energy plant, sodium chloride (NaCl) and sodium carbonate (Na₂CO₃)) is shown according to an embodiment.

| Compound | Concentration [M] | pH range |
|---|---|---|
| NaOH | about 3 - about 5 | above 13 |
| CaCl₂ (from WtE plant) | above 0.5 | about 7 - about 9 |
| NaCl (supernatant) | about 1 to about 4 | about 7 - about 10 |
| Na₂CO₃ | about 1 to about 4 | At most 12.3 |

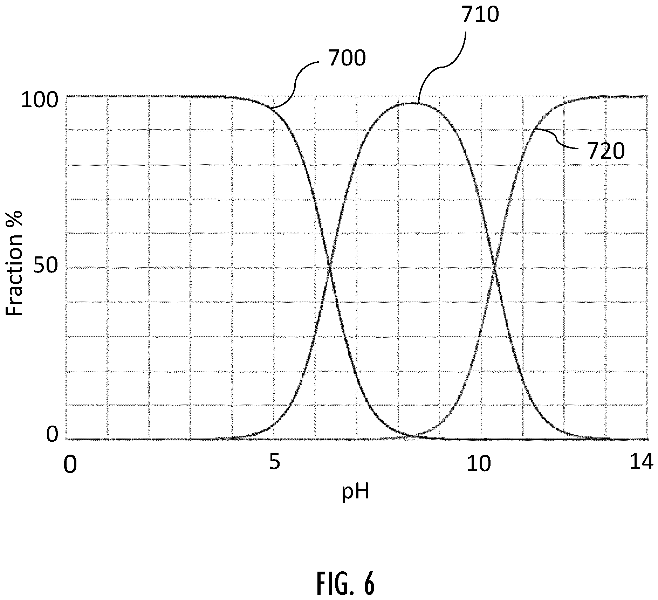

Referring now to Fig. 6 that illustrates fraction of carbon dioxide 700, bicarbonate 710 and carbonate 720 versus pH. When pH increases, carbon dioxide decreases (carbon dioxide is dissolved) and carbonate and bicarbonate fractions dominate during absorption and precipitation. Further, the higher is pH, the more dominant carbonate becomes. Specifically, if pH is above 9, preferably above 10, carbon dioxide is dissolved, and bicarbonate and carbonate are present in equilibrium. When pH is above about 10.5 carbonate dominates over bicarbonate. At pH >12.0 most of dissolved carbon dioxide (CO₂) exists as carbonate, and lesser portion exists as bicarbonate. It appears also that pH equal to 10 or over 10, say about 11, may favour calcite formation while pH lower than 10 may favour vaterite and/or aragonite formation during precipitation. At very high pH, say above 12.3, calcium hydroxide (Ca(OH)₂) will be formed.

The term "comprise" (and grammatical variations thereof) and the term "include" should be read as "comprise without limitation" and "include without limitation", respectively.

The term "aqueous solution" refers to a solution that comprises water.

The term "or" is inclusive, not exclusive.

It will be obvious to a person skilled in the art that, as technology advances, the inventive concept can be implemented in various ways. The invention and its embodiments are not limited to the example embodiments described above but may vary within the scope of the claims.

## Claims

1. A method of producing precipitated calcium carbonate, comprising steps of:
forming a first mixture comprising carbonate anions by feeding sodium hydroxide containing solution and carbon dioxide containing gas into an absorption reactor to absorb carbon dioxide with the sodium hydroxide containing solution;
obtaining a calcium carbonate containing suspension by feeding said first mixture comprising carbonate anions and a calcium containing salt solution into a precipitation reactor;
maturing the calcium carbonate containing suspension by mixing for obtaining a matured product comprising precipitated calcium carbonate having a desired crystal structure and a supernatant; and
separating said precipitated calcium carbonate having the desired crystal structure and the supernatant from the matured product.

2. The method of claim 1, wherein the calcium containing salt solution comprises calcium chloride (CaClz).

3. The method of any of claims 1-2, wherein the calcium containing salt solution comprises sodium chloride (NaCl).

4. The method of any of claims 1-2, wherein the supernatant comprises sodium chloride (NaCl) that is mixed with the calcium containing salt solution prior feeding to the precipitation reactor.

5. The method of claim 2, wherein the calcium chloride (CaClz) is calcium chloride-rich water obtained from an industrial residue stream such as bottom and/or fly ash streams of a waste-to-energy plant.

6. The method of any of claims 1-5, wherein the calcium carbonate containing suspension comprises vaterite and wherein during the maturing the calcium carbonate, vaterite is transitioned by dissolution and recrystallization to calcite that is the desired crystal structure.

7. The method of any of claims 2-6, wherein pH in the absorption reactor is maintained above 9, preferably within a range 9.5-14, most preferably within a range 12-14.

8. The method of any of claims 2-7, wherein pH in the precipitation reactor is maintained above 9, preferably within a range 9.5-14, most preferably within a range 12-14.

9. The method of any of claims 2-8, the method comprises steps of maintaining temperature at ambient in the precipitation reactor and/or maturation reactor.

10. The method of any of claims 2-8, the method comprises steps of feeding carbon dioxide containing gas at a temperature range of 30°C-50°C.

11. The method of any of claims 2-10, the method comprises separating by filtration the precipitated calcium carbonate and the supernatant from the matured product.

12. The method of claim 11, wherein the filtration comprises a washing step for washing precipitated calcium carbonate.

13. An apparatus for producing precipitated calcium carbonate, comprising:
an absorption reactor comprising at least one first feeding element configured to feed sodium hydroxide containing solution therein and at least one second feeding element configured to feed carbon dioxide containing gas therein and configured to form a first mixture comprising carbonate anions;
a precipitation reactor arranged in flow connection with the absorption reactor configured to feed the first mixture comprising carbonate anions and comprising at least one feeder to feed a calcium containing salt solution so as to obtain a calcium carbonate containing suspension in the precipitation reactor;
a mixing element configured to mix the calcium carbonate containing suspension for obtaining a matured product comprising precipitated calcium carbonate having a desired crystal structure and a supernatant; and
a separator configured to separate said precipitated calcium carbonate having the desired crystal structure and the supernatant from the matured product.

14. The apparatus according to claim 13, wherein the separator comprises a recycling line connected to the precipitation reactor and configured to recycle supernatant comprising sodium chloride (NaCl) into the precipitation reactor.

15. The apparatus of claim 14, wherein the at least one feeder comprises an inlet end connected with the recycling line for feeding supernatant therein.
